# EUROPÄISCHE PATENTSCHRIFT

(11) **EP 1 783 325 B1**
(45) Veröffentlichungstag und Bekanntmachung des Hinweises auf die Patenterteilung: **10.09.2008**
(21) Anmeldenummer: 05024337.7
(22) Anmeldetag: 08.11.2005
(51) Int. Cl.: F01D 5/02, F01D 5/08

(54) **Befestigungsanordnung eines Rohres an einer Umfangsfläche**
Fastening arrangement of a pipe on a peripheral surface
Assemblage de fixation d'un tuyau sur une surface périphérique

(43) Veröffentlichungstag der Anmeldung: 09.05.2007
(73) Patentinhaber: SIEMENS AKTIENGESELLSCHAFT, 80333 München (DE)
(72) Erfinder: Buschmann, Axel, Dr., 45355 Essen (DE); Kunze, Markus, 46569 Hünxe (DE); Reichert, Arnd, Dr., 45481 Mülheim an der Ruhr (DE)

(56) Entgegenhaltungen:
- EP-A- 1 087 101
- DE-C1- 10 013 468
- US-A- 6 053 697

## Beschreibung

Die Erfindung betrifft eine Befestigungsanordnung eines zu einer Längsachse koaxialen Rohres an einer zur Längsachse koaxialen Umfangsfläche eines Wellenabsatzes zur Verbindung beider Bauteile, wie z.B aus EP-A-1087101 bekannt.

Zur Stromerzeugung sind stationäre Gasturbinen bekannt, deren Rotoren aus aneinander liegenden Verdichterscheiben und Turbinenscheiben zusammengesetzt sind. Diese Rotorscheiben sind durch einen zentralen Zuganker miteinander verspannt und tragen an ihrem Umfang Laufschaufeln - im Verdichter zum Verdichten von Umgebungsluft und in der Turbine zur Umwandlung von Strömungsenergie in mechanische Energie durch das Entspannen eines durch Verbrennung von Brennstoff mit der verdichteten Luft entstehenden Heißgases. Um die Bauteile der Turbine vor den Temperaturen des Heißgases zu schützen, werden diese aktiv, beispielsweise mittels Kühlluft, gekühlt. Beispielsweise werden die Laufschaufeln der Turbine mit verdichteter Luft gekühlt. Ein Teil der dazu notwendigen Luft wird dem Verdichter rotorseitig entnommen und in das Innere des Rotors geführt. Die Rotorscheiben weisen zentrale Bohrungen auf, damit die entnommene Luft den Rotor in Axialrichtung durchströmen kann. Da zwischen dem Verdichter und der Turbine der Gasturbine gehäuseseitig die Brennkammer angeordnet ist, weist der Rotor in diesem axialen Abschnitt ein zur Längsachse koaxiales Rohr zur Weiterleitung der ausgekoppelten Luft auf, welches sich zwischen den gegenüberliegenden Stirnflächen der letzten Rotorscheibe des Verdichters und der ersten Rotorscheibe der Turbine abstützt. Dazu ist es bekannt, dass beide Rotorscheiben eine stirnseitig angeordnete Ringnut aufweisen, in welche das Rohr zur Führung der Kühlluft eingreift. Damit das Kühllufttrennrohr einen verdrehsicheren bzw. rutschsicheren Sitz an der Rotorscheibe aufweist, ist dieses mit einem speziellen Schrumpfsitz versehen.

Trotz des Schrumpfsitzes kann es zu betriebsbedingten Verschiebungen bzw. Verrutschungen des Kühllufttrennrohres gegenüber der Rotorscheibe kommen, was aufgrund der unterschiedlichen thermisch bedingten Dehnung beider Bauteile, insbesondere während des Anfahrens (Kaltstart) und während des Herunterfahrens der Gasturbine, auftritt. Bei dem vergleichsweise dünnwandigen Kühllufttrennrohr können diese Verschiebungen zu einer dauerhaften plastischen Verformung des Rohrendes führen. Auch führen unterschiedliche Betriebsmodi zu derartigem Verschleiß, sodass es zu Undichtigkeiten in der Verbindung zwischen dem Kühllufttrennrohr und der Rotorscheibe kommen kann. Die Undichtigkeiten führen zu Verlusten und Leckagen im Kühlluftstrom, wodurch sich der Wirkungsgrad der Gasturbine verringert.

Außerdem ist die Herstellung des Schrumpfsitzes, wodurch das Kühllufttrennrohr unter einer Vorspannung an einer Auflagefläche der Turbinenscheibe aufliegt, aufwändig, da die Fertigung des Schrumpfsitzes eines Toleranzbereichs von wenigen Hundertstel Millimetern bedarf.

Dementsprechend ist die Aufgabe der Erfindung die Schaffung einer Befestigungsanordnung eines Rohres an einer Umfangsfläche eines Wellenabsatzes, welche besonders einfach und kostengünstig herzustellen und zudem beim Betrieb verschleißfrei ist.

Zur Lösung dieser Aufgabe wird gemäß der Erfindung eine gattungsgemäße Befestigungsanordnung angegeben, bei der die Innenseite des dem Wellenabsatz zugewandten Rohrendes einer am Wellenabsatz angeordneten koaxialen Umfangsfläche anliegt, wobei das Rohrende über den Umfang verteilte Ausklinkungen und eine an der Innenseite des Rohres im Bereich der Ausklinkungen umlaufende Ringnut mit einer darin angeordneten, die Ausklinkungen überdeckenden Hülse aufweist, deren Innenfläche entlang der Umfangsfläche anliegt.

Gemäß der Erfindung werden die Anforderungen an die Befestigungsanordnung im Hinblick auf die mechanische Belastung und an die Dichtigkeit durch eine funktionale Trennung voneinander gelöst. Die für den verschleißfreien Sitz des Rohres an der Umfangsfläche erforderliche, vorbestimmte Steifigkeit bzw. Elastizität wird durch die Form, Anzahl und Abmaße der am Rohrende vorgesehenen Ausklinkungen sowie der dadurch verbleibenden und an der Umfangsfläche anliegenden Zähne eingestellt. Dadurch wird erreicht, dass die betriebsbedingten Verschiebungen zwischen der Rotorscheibe und des Rohres lediglich Materialspannungen im Rohr erzeugen, die elastische, aber keine plastischen Verformungen des Endes hervorrufen. Die Zähne liegen an der Umfangsfläche federelastisch an. Die durch die Ausklinkungen entstehende Undichtigkeit wird durch die alle Ausklinkungen überdeckende Hülse abgedichtet. Die Hülse ist im Inneren des Rohres in einer Ringnut angeordnet und liegt in zwei voneinander getrennten, jeweils umlaufenden Dichtbereichen an; an der Umfangsfläche des Wellenabsatzes einerseits und an der Innenseite der Ringnut andererseits.

Die Erfindung geht außerdem von der Erkenntnis aus, dass zur reinen Abdichtung des Übergangs vom Rohr zum Wellenabsatz eine geringere Steifigkeit nötig ist als zur verschleißfreien Befestigung des Rohres. Aufgrund der unterschiedlichen Steifigkeit der Hülse und des durch Ausklinkungen zahnförmigen Rohrendes kann eine besonders einfache Befestigungsanordnung eines zu einer Längsachse koaxialen Rohres an einem durch die Längsachse drehgelagerten Wellenabsatzes zur Verbindung beider Bauteile angegeben werden, welche trotz seiner kostengünstigen und einfachen Herstellung besonders verschleißarm ist. Das Rohr ist einfach und preiswert herzustellen, da es über einen kreisförmigen Sitz verfügt.

Ein wesentliches Merkmal der Erfindung ist demnach die Trennung vom elastischen Sitz des Rohres auf dem Wellenabsatz und der Abdichtung der Verbindung beider Bauteile durch die Hülse.

Da die Hülse die Ausklinkungen überdeckt, führt dies zu einer dichten Verbindung zwischen Rohr und Wellenabsatz, sodass im Inneren des Rohres ein Medium zuverlässig führbar ist, ohne dass betriebsbedingte Leckagen bzw. Verluste von Medium durch einen undichten Verbindungsbereich beider Bauteile auftreten.

Die Werkstoffauswahl für das Rohr und die Hülse erfolgen auf Basis der Wärmedehnungen und des Verschleißverhaltens, die an der gewünschten Stelle gefordert sind.

Außerdem wird vermieden, dass die Hülse sich relativ zum Rohr bewegt. Die auf der Innenseite des Rohres eingebrachte Ringnut formt an jedem Zahn des Rohrendes endseitig einen Vorsprung, an der Hülse stirnseitig unverschiebbar anliegt. So wahren alle Bauteile ihre relative Position zueinander, ohne dass eine betriebsbedingte und verschleißbehaftete Verkeilung zueinander auftritt.

Vorteilhafte Ausbildungen der Erfindung werden in den Unteransprüchen angegeben.

Um eine besonders zuverlässige Verbindung beider Bauteile zu erreichen, weist die Hülse eine Wanddicke auf, die der Tiefe der Ringnut entspricht. Dadurch ist es möglich, dass die Hülse an der Umfangsfläche des Wellenabsatzes und an der Innenseite der Ringnut vollumfänglich anliegen, so dass einerseits das Rohrende mit der erforderlichen Steifigkeit und Elastizität am Wellenabsatz zu dessen Lagerung und Befestigung anliegt und die Hülse mit der zur Dichtung erforderlichen Steifigkeit bzw. Elastizität auch an der Umfangsfläche dicht anliegt.

In einer Weiterbildung der Hülse weist diese mindestens einen an der äußeren Umfangsseite der Hülse angeordneten, sich in Umfangsrichtung erstreckenden und in montierter Lage in eine der Ausklinkungen eingreifenden Steg auf, der sich über die gesamte Breite der Ausklinkung erstreckt. Das Verdrehen der Hülse gegenüber dem Rohr wird demnach durch den beidseitig an den Zähnen anliegenden Steg verhindert.

Besonders sicher und verschleißarm kann die Verdrehung der Hülse gegenüber dem Rohr verhindert werden, wenn in jede Ausklinkung jeweils ein an der äußeren Umfangsseite der Hülse angeordneter Steg in diese eingreift.

Ein besonders günstiges Gewicht der Hülse lässt sich erreichen, wenn die Hülse mehrere, über den Umfang verteilte, radial gerichtete Ausnehmungen aufweist, die ggf. jeweils zwischen den ebenfalls über den Umfang verteilten Stegen vorgesehen sind. Die Ausnehmungen reduzieren das Gewicht der Hülse und machen diese weicher als das Rohr. Zusätzlich weist die Hülse ein dem Wellenabsatz zugewandtes Ende mit parallel zur Längsachse verlaufen Schlitzen auf, die jeweils in einer der Ausnehmungen enden. Diese etwa 1mm breiten Schlitze führen zu einer weiter verbesserten Elastizität der Hülse. Da jeder Zahn und jeder daran angeordnete Vorsprung entlang der Schlitzöffnung dicht anliegt, entstehen an diesen Stellen der Abdichtung keine Undichtigkeiten zwischen Hülse, Vorsprung und Umfangsfläche. Im Inneren des Rohres geführtes Medium kann demnach nicht nach außen dringen.

Die Befestigungsanordnung nach der Erfindung kann vorteilhaft eingesetzt werden, wenn der Wellenabsatz eine stirnseitige Seitenfläche aufweist, in der eine zur Längsachse konzentrische Ringnut vorgesehen ist, deren radial innere Nutwand die koaxiale Umfangsfläche zur Anlage des Rohres bildet. Das Rohrende greift dann mit seinen von den Ausklinkungen gebildeten Zähnen in die Ringnut ein.

Zweckmäßigerweise wird der Wellenabsatz von einer Rotorscheibe gebildet bzw. ist die stirnseitige Seitenfläche des Wellenabsatzes die Seitenfläche einer Rotorscheibe. Da der Wellenabsatz bzw. die Rotorscheibe besonders große Massen aufweisen, haben diese gegenüber dem Rohr und dessen Ende ein zeitlich unterschiedliches Dehnungsverhalten aufgrund unterschiedlicher Masseanhäufungen auf. Das macht es erforderlich, das Rohrende gemäß der Erfindung in der Rotorscheibe dehnungstolerant anzulegen und zu befestigen.

Ein Rotor für eine Strömungsmaschine mit einem Rohr und einem Wellenabsatz, welche durch eine erfindungsgemäße Befestigungsanordnung miteinander verbunden sind, weist eine besonders große Lebensdauer auf, ebenso eine Gasturbine, die mit solch einem Rotor ausgestattet ist. Des Weiteren werden durch den zuverlässigen und dichten Sitz Verluste von im Inneren des Rohres strömenden Medium, beispielsweise Kühlluft, vermieden, was den Wirkungsgrad der Gasturbine aufrechterhält.

Um die für einen verschleißfreien Sitz des Rohres am Wellenabsatz und für die Dichtigkeit erforderliche Elastizität der Hülse optimal einzustellen, ist das Dickenverhältnis von Rohrwand zur Hülsenwand etwa 3:1.

Die weitere Erläuterung der Erfindung erfolgt anhand der in der Zeichnung dargestellten Ausführungsbeispiele.

Im Einzelnen zeigen:
- FIG 1: eine Gasturbine in einem Längsteilschnitt,
- FIG 2: eine Befestigungsanordnung eines Rohres an einem Wellenabsatz in einer Schnittdarstellung,
- FIG 3: einen Ausschnitt des an dem Wellenabsatz befestigbaren Rohrendes in perspektivischer Darstellung,
- FIG 4: einen Abschnitt einer Hülse als Teil der Befestigungsanordnung in perspektivischer Ansicht,
- FIG 5: in perspektivischer Darstellung einen Ausschnitt des Rohrendes mit an der Innenseite des Rohres montierter Hülse,
- FIG 6: die stirnseitige Ansicht des Rohres gemäß FIG 5,
- FIG 7: den Querschnitt des Rohrendes mit montierter Hülse,
- FIG 8: Detail X gemäß FIG 7 in der Schnittdarstellung VIII nach FIG 6 und
- FIG 9: Detail X gemäß FIG 7 in der Schnittdarstellung IX nach FIG 6.

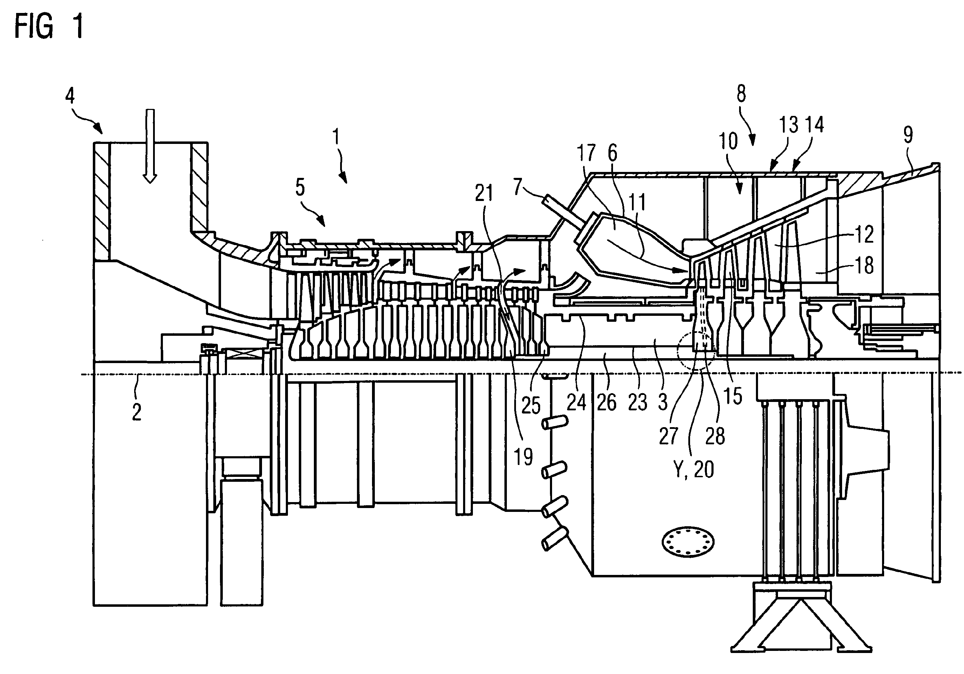

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 mittels einer Turbinenscheibe am Rotor 3 angebracht sind. An dem Rotor 3 ist ein Generator oder eine Arbeitsmaschine (nicht dargestellt) angekoppelt.

Zur Kühlung der Laufschaufeln 15 der Turbineneinheit 8 wird dem Verdichter 5 rotorseitig an der Kühlluftentnahmestelle 21 Kühlluft entnommen und in das Innere des Rotors 3 geführt. Von der Kühlluftentnahmestelle 21 aus strömt die entnommene und zur Kühlung von Turbinenbauteilen vorgesehene Luft zuerst durch in den Rotorscheiben 19 vorgesehene Bohrungen und tritt anschließend in den Innenraum 26 eines Rohres 23 ein. Das Rohr 23 erstreckt sich von der Rotorscheibe 25 des Verdichters 5 bis zur Rotorscheibe 27 der ersten Turbinenstufe koaxial zur Längsachse 2. Von dort aus wird die Kühlluft durch in der Rotorscheibe 27 angeordnete, teilweise dargestellte Bohrungen 28 zu den Laufschaufeln 15 der Turbineneinheit 8 geführt. Das Drehmoment des Rotors 3 wird von einer das Rohr 23 umgreifenden Hohlwelle 24 von der turbinenseitigen Rotorscheibe 27 zur verdichterseitigen Rotorscheibe 25 übertragen.

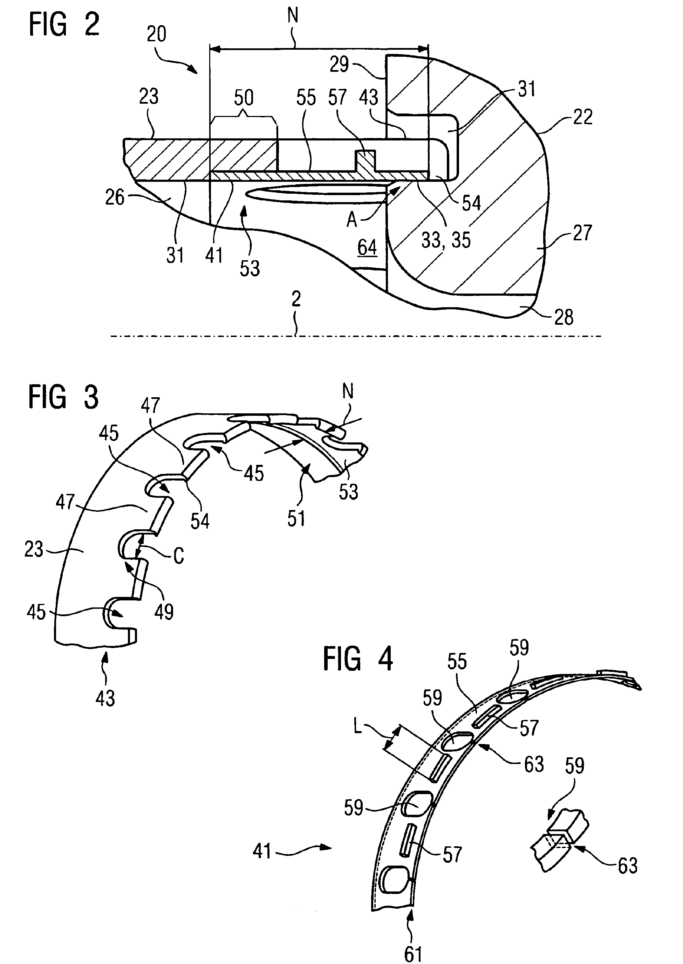

Die Befestigungsanordnung 20 des koaxialen Rohres 23 an einem um die Längsachse 2 drehbar gelagerten Wellenabsatz, wie sie beispielsweise im Detail Y der FIG 1 zum Einsatz kommt, zeigt im Detail FIG 2. Das Ende des Rohres 23, welches in die Rotorscheibe 25 des Verdichters 5 eingreift, kann zusätzlich oder alternativ gemäß der Befestigungsanordnung 20 ausgestaltet sein.

FIG 2 zeigt in Querschnittsansicht das Detail Y aus FIG 1 mit dem Rohr 23 sowie der Rotorscheibe 27. Die Rotorscheibe 27 weist an ihrer Stirnseite 29 eine konzentrisch zur Längsachse 2 endlos verlaufende Ringnut 31 auf. Die radial innere Nutwand 33 der Ringnut 31 bildet die koaxiale Umfangsfläche 35, an der das Rohr 23 anliegt. Anstelle einer Ringnut 31 könnte das Rohr 23 auch an der äußersten Umfangsfläche eines Wellenabsatzes 22 oder eines Wellenbundes anliegen.

Im Inneren des Rohres 23 ist eine Hülse 41 vorgesehen, welche mit ihrer Innenseite 64 ebenfalls entlang der Umfangsfläche 35 bzw. an der radial inneren Nutwand 33 der Ringnut 31 anliegt und so einen ersten koaxial umlaufenden Dichtbereich A zwischen Hülse 41 und Umfangsfläche 35 bildet. Das Dickenverhältnis von Rohrwand zur Hülsenwand beträgt etwa 3:1.

Das in die Ringnut 31 eingeschobene und in dieser unter einer vorzugsweise geringen Vorspannung befestigte Ende 43 des Rohres 23 zeigt FIG 3 in perspektivischer Ansicht. Am Rohrende 43 sind über dessen Umfang gleichmäßig verteilte Ausklinkungen 45 vorgesehen, die dazwischen liegende Zähne 47 bilden.

Die Ausklinkungen 45 sind an ihrem dem Rohrende 43 abgewandtem Ende 49 verrundet, um Kerbspannungen an dieser Stelle zu vermeiden. Die über den Umfang des Rohres 23 verteilten Ausklinkungen 45 und somit auch die dazwischen liegenden Zähne 47 sind vorzugsweise rotationssymmetrisch angeordnet. Jede Ausklinkung 45 weist in Umfangsrichtung eine Breite C auf, die vorzugsweise für jede Ausklinkung 45 identisch ist.

An der Innenseite 51 des Rohres 23 ist eine umlaufende Ringnut 53 vorgesehen, in welche eine Hülse 41 eingesetzt werden kann. Die Ringnut 53 ist zum Ende 43 des Rohres 23 geringfügig beabstandet, so dass an jedem Zahn 47 ein Vorsprung 54 zur Verhakung der Hülse 41 gebildet wird. Außerdem weist die Ringnut 53 eine sich in Axialrichtung des Rohres 23 erstreckende Nutbreite N auf, welcher zur Längserstreckung der formschlüssig eingesetzten Hülse 41 korrespondiert. Die Nutbreite N ist so gewählt, dass die Ringnut 53 das verrundete Ende 49 der Ausklinkungen 45 überragt und so eine in umlaufende Anlagefläche 50 (FIG 2) für die in Hülse 41 bietet, die mindestens ein Teil eines zweiten Dichtbereichs ist.

Die in die Ringnut 53 einsetzbare Hülse 41 zeigt FIG 4 in perspektivischer Ansicht. Die Hülse 41 ist mit mehreren, am Außenumfang 55 angeordneten Stegen 57 ausgestattet, deren jeweils sich in Umfangsrichtung erstreckende Länge L jeweils der Breite C der Ausklinkungen 45 entspricht. Die Hülse 41 weist optional zudem über den Umfang verteilte, jeweils zwischen zwei Stegen 57 angeordnete Ausnehmungen 59 auf, welche das Gewicht der Hülse reduzieren und diese vergleichsweise elastisch machen, bezogen auf die Elastizität des Rohrendes 43. Außerdem ist fakultativ an jeder Ausnehmung 59 an der dem Wellenabsatz 22 zugewandten Ende 61 jeweils ein Schlitz 63 vorgesehen, welcher im wesentlichen achsparallel zur Längsachse 2 verläuft und zur weiteren Steigerung der Elastizität der Hülse 41 beiträgt.

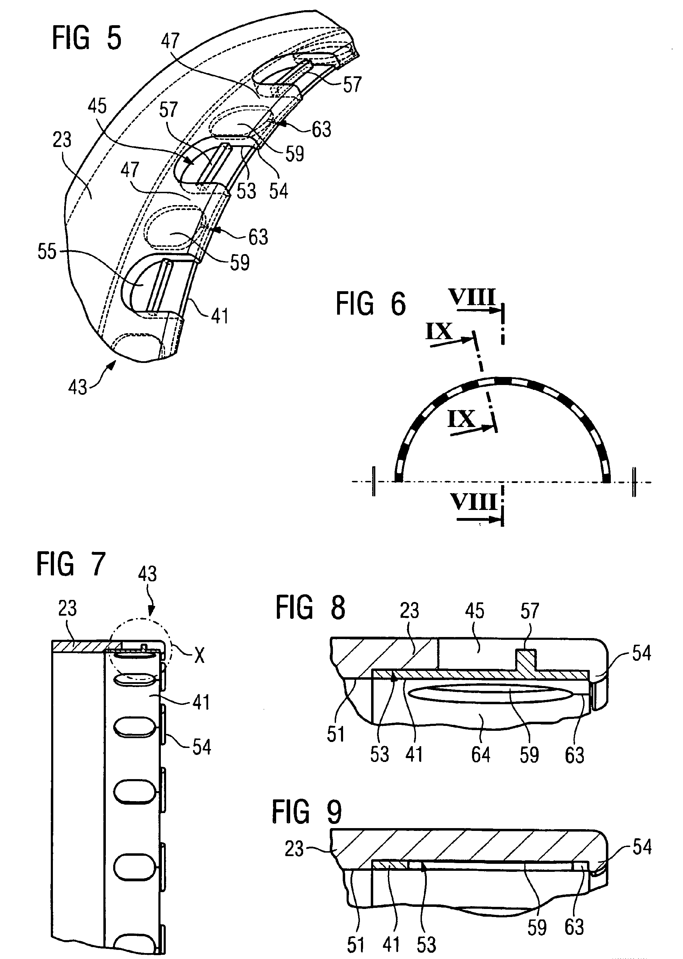

FIG 5 zeigt das Rohrende 43 mit bereits montierter Hülse 41. Aufgrund der an der Innenseite 51 des Rohres 23 umlaufenden Ringnut 53 ist am äußersten Ende 43 des Rohres 23 an jedem Zahn 47 ein Vorsprung 54 geformt (siehe FIG 2), an welchem die Hülse 41 gegenüber einer Verkippung gesichert ist. Da die Zähne 47 eine radialgerichtete federelastische Wirkung ermöglichen, kann zur Montage die Hülse 41 in das Innere des Rohres 23 vergleichsweise einfach eingeschoben werden. Dadurch ist eine zuverlässige Positionierung und Befestigung der elastischeren Hülse 41 an der Innenseite 51 des Rohrendes 43 gewährleistet.

Wie aus FIG 5 ersichtlich, weisen die Hülse 41 und die Ringnut 53 eine axiale Breite N auf, die so gewählt ist, dass die eingesetzte Hülse 41 alle Ausklinkungen 45 vollflächig überdeckt. Ebenso überdeckt jeder Zahn 47 eine der Ausnehmungen 59 vollflächig, so dass die aneinander liegenden Flächen der Zähne 47 und der Hülse 41 einen weiteren Teil des zweiten Dichtbereichs bilden.

Die Tiefe der Ringnut 53 entspricht im Wesentlichen der Wanddicke der Hülse 41. Dadurch ist es möglich, dass über den gesamten Umfang die Innenseite 64 der Hülse 41 und jeder Vorsprung 54 an der Umfangsfläche 35 bzw. an der radial inneren Nutwand 33 der Ringnut 31 dicht anliegen.

Eine rein stirnseitige Ansicht auf FIG 5 zeigt FIG 6, wobei die dunkel dargestellten Abschnitte die Ausklingungen 45 und die hell dargestellten Abschnitte die Zahne 47 darstellen.

FIG 7 zeigt das Rohrende 43 mit eingesetzter Hülse 41 in einer Schnittansicht. Das Detail X wird in den FIG 8 und FIG 9 gemäß der zugehörigen Schnittlinien aus FIG 6 detailliert gezeigt.

In FIG 8 ist der durch die Ringnut 53 verbleibende Vorsprung 54 an der Innenseite 51 des Rohres 23 gezeigt. In die Ringnut 53 ist die besonders elastische Hülse 41 eingebracht, deren Stege 57 in Axialrichtung verlaufend die Hülse 41 gegenüber einer Verschiebung sichern. Die Stege 57 sind in den Ausklinkungen 45 angeordnet. Aufgrund der perspektivischen Teilschnittdarstellung der FIG 8 ist auch eine der Ausnehmungen 59 gezeigt, die an einem ihrer Enden aufgrund des Schlitzes 63 stirnseitig geöffnet ist. Obwohl der in der Regel 1 mm breite Schlitz 63 jeweils eine Unterbrechung des Umfangs der Hülse 41 und somit scheinbar des Dichtbereich A darstellt, ist dieser trotzdem dicht. An dieser Stelle liegt der an der Hülse 41 außen anliegende Zahn 47 mit dem jeweiligen endseitig angeordneten Vorsprung 54 dicht an der Umfangsfläche 35 an und bildet somit jeweils einen weiteren Teil des zweiten Dichtbereichs.

FIG 9 zeigt den Schnitt gemäß IX aus der FIG 6 mit dem Rohr 23. Aufgrund der Ausklinkungen 45 ist das ansonsten vergleichsweise steife Rohr 23 im Bereich des Rohrendes 43 weicher ausgebildet, so dass - anliegend an einer Umfangsfläche - ein verschleißarmer Sitz an der Umfangsfläche 35 gewährleistet ist. Dieser elastische Sitz ermöglicht beiden Bauteilen, dem Rohr 23 sowie dem Wellenabsatz 22 bzw. der Rotorscheibe 27, eine sowohl wärme- als auch fliehkraftbedingte Dehnungen unter Aufrechterhaltung einer zuverlässigen Dichtung der Verbindung. Insbesondere aufgrund der unterschiedlichen Steifigkeit bzw. Elastizität sowie der nun verschleißlosen, weil dehnungstoleranten Befestigung beider Bauteile kann ein besonders zuverlässiger und langlebiger Sitz bzw. eine dementsprechende Befestigungsanordnung 20 mit der Erfindung angegeben werden.

Insgesamt wird mit der Erfindung eine zuverlässige und verschleißfreie Befestigungsanordnung angegeben, welche ein dichtes Verbinden eines als Kühllufttrennrohr ausgebildeten Rohres und an einer Umfangsfläche ermöglicht, damit ein im Inneren strömendes Medium leckagefrei in einen innerhalb der Umfangsfläche im Wellenabsatz liegenden Strömungsraum, beispielsweise in eine Bohrung, geführt werden kann. Die Befestigungsanordnung umfasst ein Rohr mit endseitig angeordneten Ausklingungen, die an der Umfangsfläche anliegen. An der Innenseite des Rohres ist eine Hülse angeordnet, welche Hülse eine axiale Breite aufweist, die die Ausklinkungen überdeckt. Die Hülse ist zudem weicher als das Rohr und als das Rohrende, was durch das Dickenverhältnis von Rohr zur Hülse, durch die Ausklinkungen, Ausnehmungen und durch die Schlitze erreicht wird.

## Patentansprüche

1. Befestigungsanordnung (20) eines Rohres (23) an der zu seiner Längsachse (2) koaxialen Umfangsfläche (35) eines Wellenabsatzes (22), an welchem Wellenabsatz (22) die Innenseite (51) des dem wellenabsatz (22) zugewandte Rohrendes (43) zur Verbindung beider Bauteile zumindest teilweise anliegt,
**dadurch gekennzeichnet, dass**
das Rohrende (43) über den Umfang verteilte Ausklinkungen (45) und eine an der Innenseite (51) des Rohres 23 im Bereich der Ausklinkungen (45) umlaufende Ringnut (53) mit einer darin angeordneten, die Ausklinkungen (45) überdeckenden Hülse (41) aufweist, deren Innenfläche (64) an der Umfangsfläche (35) umlaufend anliegt.

2. Befestigungsanordnung (20) nach Anspruch 1,
bei der die Hülse (41) eine Wanddicke aufweist, die der Tiefe der Ringnut (53) entspricht.

3. Befestigungsanordnung (20) nach Anspruch 1 oder 2,
bei der in eine der Ausklinkungen (45) ein an der äußeren Umfangsseite (55) der Hülse (41) angeordneter, sich in Umfangsrichtung erstreckender Steg (57) eingreift, der sich über die gesamte Breite (C) der Ausklinkung (45) erstreckt.

4. Befestigungsanordnung (20) nach Anspruch 3,
bei der in jede Ausklinkung (45) ein an der äußeren Umfangsseite (55) der Hülse (41) angeordneter Steg (57) eingreift.

5. Befestigungsanordnung nach einem der vorangehenden Ansprüche,
bei der in der Hülse (41) mehrere radialgerichtete Ausnehmungen (59) vorgesehen sind.

6. Befestigungsanordnung (20) nach Anspruch 5,
bei der die Hülse (41) ein dem Wellenabsatz (22) zugewandtes Ende mit insbesondere achsparallel verlaufenden Schlitzen (63) aufweist, die jeweils in einer der Ausnehmungen (59) enden.

7. Befestigungsanordnung (20) nach einem der vorangehenden Ansprüche,
bei der der Wellenabsatz (22) eine stirnseitige Seitenfläche (29) aufweist,
in der eine zur Längsachse (2) konzentrische Ringnut (53) vorgesehen ist,
deren radial innere Nutwand (33) die koaxiale Umfangsfläche (35) zur Anlage des Rohres (23) bildet.

8. Befestigungsanordnung (20) nach einem der vorangehenden Ansprüche,
bei der das Rohr (23) eine Wanddicke aufweist, die ungefähr um den Faktor 3 größer ist als die Wanddicke der Hülse (41).

9. Befestigungsanordnung (20) nach einem der vorangehenden Ansprüche,
bei der der Wellenabsatz (22) von einer Rotorscheibe (25, 27) gebildet ist.

10. Rotor (3) für eine Strömungsmaschine mit einem Rohr (23) und einem Wellenabsatz (22),
welche durch eine Befestigungsanordnung (20) nach einem der vorangehenden Ansprüche miteinander verbunden sind.

11. Rotor (3) nach Anspruch 10,
bei dem innerhalb des Rohres (23) ein Medium führbar ist.

12. Gasturbine (1) mit einem Rotor (3) nach einem der Ansprüche 10 oder 11.

## Claims

1. Fastening arrangement (20) of a pipe (23) on the circumferential surface (35) of a shaft step (22), which surface is coaxial to the longitudinal axis (2) of the pipe, upon which shaft step (22) lies at least partially the inner side (51) of the pipe end (43) which faces the shaft step (22), for connecting of the two component parts,
**characterized by**
the pipe end (43) has notches (45) which are distributed over the circumference, and has an encompassing annular slot (53) on the inner side (51) of the pipe (23) in the region of the notches (45), within which annular slot is installed a sleeve (41) which covers the notches (45), the inner face (64) of which lies upon the circumferential surface (35) in an encompassing manner.

2. Fastening arrangement (20) according to claim 1,
in which
the sleeve (41) has a wall thickness which corresponds to the depth of the annular slot (53).

3. Fastening arrangement (20) according to claim 1 or 2,
in which
a bar (57) engages in one of the notches (45), which bar is located on the outer circumferential side (55) of the sleeve (41), extends in the circumferential direction, and extends over the whole width (C) of the notch (45).

4. Fastening arrangement (20) according to claim 3,
in which
a bar (57) engages in each notch (45), which bar is located on the outer circumferential side (55) of the sleeve (41).

5. Fastening arrangement according to one of the preceding claims,
in which
a plurality of radially orientated cutouts (59) are provided in the sleeve (41).

6. Fastening arrangement (20) according to claim 5,
in which
the sleeve (41) has one end, which faces the shaft step (22), with slots (63) extending especially axially parallel, each terminates in one of the cutouts (59).

7. Fastening arrangement (20) according to one of the preceding claims,
in which
the shaft step (22) has an end face side surface (29), in which is provided an annular slot (53) which is concentric to the longitudinal axis (2),
the radially inner slot wall (33) of which forms the coaxial circumferential surface (35) for attaching the pipe (23).

8. Fastening arrangement (20) according to one of the preceding claims,
in which
the pipe (23) has a wall thickness which is greater than the wall thickness of the sleeve (41), approximately by the factor of 3.

9. Fastening arrangement (20) according to one of the preceding claims,
in which
the shaft step (22) is formed by a rotor disk (25, 27).

10. Rotor (3) for a turbo-engine, with a pipe (23) and a shaft step (22),
which are interconnected by a fastening arrangement (20) according to one of the preceding claims.

11. Rotor (3) according to claim 10,
in which
a medium is guidable inside the pipe (23).

12. Gas turbine (1) with a rotor (3) according to one of claims 10 or 11.

## Revendications

1. Assemblage ( 20 ) de fixation d'un tuyau ( 23 ) sur la surface ( 35 ) périphérique coaxiale à son axe ( 2 ) longitudinal d'un gradin ( 22 ) d'arbre, gradin ( 22 ) d'arbre auquel la face ( 51) intérieure de l'extrémité ( 43 ) du tuyau tournée vers le gradin ( 22 ) d'arbre s'applique au moins partiellement pour relier les deux éléments,
**caractérisé en ce que**
l'extrémité ( 43 ) du tuyau a des mortaises ( 45) réparties sur le pourtour et une gorge ( 53) annulaire s'étendant sur la face ( 51) intérieure du tuyau ( 23 ) dans la partie des mortaises ( 45) et ayant un manchon ( 41) qui y est disposé et qui recouvre les mortaises ( 45 ), la surface ( 64 ) intérieure du manchon s'appliquant à la surface ( 35 ) périphérique en en faisant le tour.

2. Assemblage ( 20 ) de fixation suivant la revendication 1,
dans lequel le manchon ( 41 ) a une épaisseur de paroi qui correspond à la profondeur de la gorge ( 53 ) annulaire.

3. Assemblage ( 20 ) de fixation suivant la revendication 1 ou 2,
dans lequel une nervure ( 57 ) disposée sur la face ( 55 ) périphérique extérieure du manchon ( 41 ), s'étendant dans la direction périphérique et s'étendant sur toute la largeur ( C) de la mortaise ( 45 ) est disposée dans l'une des mortaises ( 45 ).

4. Assemblage ( 20 ) de fixation suivant la revendication 3,
dans lequel une nervure ( 57 ) disposée sur la face ( 55 ) périphérique extérieure du manchon ( 41 ) pénètre dans chaque mortaise ( 45 ).

5. Assemblage ( 20 ) de fixation suivant l'une des revendications précédentes,
dans lequel il est prévu dans le manchon ( 41 ) plusieurs évidements ( 59 ) dirigés radialement.

6. Assemblage ( 20 ) de fixation suivant la revendication 5,
dans lequel le manchon ( 41 ) a une extrémité tournée vers le gradin ( 22) d'arbre et ayant des fentes ( 63 ) s'étendant notamment parallèlement à l'axe et se terminant respectivement dans l'un des évidements ( 59 ).

7. Assemblage ( 20) de fixation suivant l'une des revendications précédentes,
dans lequel le gradin ( 22 ) d'arbre a une surface ( 29 ) latérale du côté frontal,
dans laquelle est prévue une gorge ( 53 ) annulaire concentrique à l'axe ( 2 ) longitudinal,
dont la paroi ( 33 ) intérieure radialement forme la surface ( 35 ) périphérique coaxiale d'application du tuyau ( 23 ).

8. Assemblage ( 20 ) de fixation suivant l'une des revendications précédentes,
dans lequel le tuyau ( 23 ) a une épaisseur de paroi qui est à peu près plus grande du facteur 3 que l'épaisseur de paroi du manchon ( 41 ).

9. Assemblage ( 20) de fixation suivant l'une des revendications précédentes,
dans lequel le gradin ( 22 ) d'arbre est formé par un disque ( 25, 27 ) de rotor.

10. Rotor ( 3 ) pour une turbomachine comprenant un tuyau ( 23 ) et un gradin ( 22 ) d'arbre,
qui sont reliés entre eux par un assemblage ( 20 ) de fixation suivant l'une des revendications précédentes.

11. Rotor ( 3 ) suivant la revendication 10,
dans lequel un fluide peut passer à l'intérieur du tuyau ( 23 ).

12. Turbine ( 1 ) à gaz ayant un rotor ( 3 ) suivant l'une des revendications 10 ou 11.
